## Europäisches Patentamt
## European Patent Office
## Office européen des brevets

(11) Veröffentlichungsnummer : **0 083 919**
**B1**

(12) # EUROPÄISCHE PATENTSCHRIFT

(45) Veröffentlichungstag der Patentschrift :
**19.08.87**

(51) Int. Cl.⁴ : **C 04 B 35/04, C 04 B 35/74, C 21 C 7/072**

(21) Anmeldenummer : **82890188.4**

(22) Anmeldetag : **28.12.82**

(54) Verfahren zur Herstellung von gebrannten, feuerfesten Steinen mit durchgehenden Kanälen.

(30) Priorität : **12.01.82 AT 81/82**

(43) Veröffentlichungstag der Anmeldung :
**20.07.83 Patentblatt 83/29**

(45) Bekanntmachung des Hinweises auf die Patenterteilung : **19.08.87 Patentblatt 87/34**

(84) Benannte Vertragsstaaten :
**BE CH DE FR GB IT LI LU NL SE**

(56) Entgegenhaltungen :
**DE-A- 1 646 424**
**US-A- 4 166 604**

(73) Patentinhaber : **Radex Austria Aktiengesellschaft für feuerfeste Erzeugnisse**
**A-9545 Radenthein (AT)**

(72) Erfinder : **Grabner, Bernd, Dipl.-Ing.**
**Rainweg 1**
**A-9545 Radenthein (AT)**
Erfinder : **Heinricher, Mario, Dipl.-Ing.**
**Neuhofstrasse 17**
**A-9545 Radenthein (AT)**
Erfinder : **Mörtl, Günther Lorenz, Dr. Dipl.-Ing.**
**Zeno-Goess-Strasse 40**
**A-9500 Villach (AT)**

(74) Vertreter : **Leeb, Walther Dr.**
**Liniengasse 2a**
**A-1060 Wien (AT)**

## Beschreibung

Die Erfindung betrifft ein Verfahren zur Herstellung von gebrannten, feuerfesten Steinen mit durchgehenden Kanälen aus einem basischen, feuerfesten Material aus der Gruppe Magnesia, Mischungen von Magnesia und Chromerz, sowie Spinelle auf der Grundlage von $MgO.Al_2O_3$ und $MgO.Cr_2O_3$ mit einem MgO-Gehalt von 20 bis 37 Gew.-%, wobei das für die Steinherstellung dienende feuerfeste Material gekörnt in eine Form eingebracht und in dieser mit Elementen aus Metall zur Bildung der Kanäle verdichtet wird. Die basischen, feuerfesten Stoffe können dabei Sinter- oder Schmelzmaterialien sein, wobei als Mischungen von Magnesia und Chromerz und $MgO.Cr_2O_3$-Spinelle auch Simultansinter verwendet werden können, das heißt durch gemeinsames Sintern von Ausgangsstoffen, die aus MgO und $Cr_2O_3$ bestehen oder diese Verbindungen beim Brennen liefern, erhaltene Sintermaterialien.

Feuerfeste Erzeugnisse mit durchgehenden Kanälen, die man häufig auch als durchgehende Poren oder gerichtete Poren bezeichnet, werden auf verschiedenen Gebieten der Industrie, insbesondere aber in metallurgischen Öfen und Gefäßen, oft verwendet, um durch ihre Kanäle vor allem Gase oder feinverteilte Feststoffe z. B. in eine Metallschmelze einzuführen. Solche Erzeugnisse, wie Düsensteine für die Böden von Konvertern, insbesondere Thomaskonvertern, werden beispielsweise auf die Weise hergestellt, daß man ein gekörntes feuerfestes Material, wie Sintermagnesia, in eine Form mit Nadeln oder Kernen, die für die Bildung der Kanäle bestimmt und im allgemeinen am Boden der Form aufrechtstehend auf einer in der Form verbleibenden Platte, der sogenannten Nadelplatte, fest angeordnet sind, einbringt und in dieser durch Stampfen, Rütteln, Vibrieren oder Verpressen verdichtet. Wenn die Erzeugnisse dann aus der Form entnommen werden, weisen sie an den Stellen, an denen sich die Nadeln in der Form in das feuerfeste Material erstreckten, Kanäle auf. Die Kanäle der auf diese Weise erhaltenen Düsensteine haben gewöhnlich einen Durchmesser von 12 bis 16 mm und eine Länge von über 500 mm. Diese Art der Herstellung von Formkörpern mit durchgehenden Kanälen wird vor allem bei einer Verkleinerung des Durchmessers, aber auch bei einer Erhöhung der Länge der Kanäle immer schwieriger, weil entsprechende Nadeln bzw. Kerne in der für die Erzeugung der Formkörper benutzten Form bei der Verdichtung des feuerfesten Materials, und insbesondere wenn dieses verpreßt wird, leicht verformt werden. Großformatige feuerfeste Erzeugnisse mit Kanaldurchmessern von unter 10 mm, beispielsweise etwa 5 bis 6 mm, und Kanallängen, die etwa das 70- bis 200-fache und mehr des Kanaldurchmessers betragen, können aber dadurch erhalten werden, daß eine gießfähige feuerfeste Masse in eine Form gegossen wird, in der Kerne, die in ihrer Lage gesichert sind, für die Bildung der Kanäle angeordnet sind, die Masse verfestigt und dann das Erzeugnis mit den Kernen aus der Form ausgebracht wird. Die gießfähige feuerfeste Masse kann dabei einen MgO-Gehalt von mindestens 85 Gew.-% haben, und die Kerne können entweder aus einem schmelzbaren Material, z. B. aus Kunststoff, bestehen, das während des Trocknungsvorganges ausschmilzt oder verdampft, oder drahtartige Gebilde sein, die aus dem geformten Körper unter Zurücklassung glatter Innenwandungen herausgezogen werden (AT-A-248 936). Feuerfeste Erzeugnisse aus Gießmassen können jedoch nur durch Rütteln oder Vibrieren verdichtet werden und sind in verschiedener Hinsicht durch Verpressen gewonnenen Formlingen unterlegen. Ferner ist ein Verfahren zum Herstellen von feuerfesten Körpern mit durchgehenden Poren bzw. Kanälen bekannt, bei dem ein Gewebe aus mindenstens teilweise brennbaren Schuß- und/oder Kettfäden zusammen mit feuerfestem Material schichtweise verdichtet und der erhaltene Schichtkörper getrocknet und gebrannt wird, wobei durch Ausbrennen des Gewebes Poren bzw. Kanäle entstehen (DE-A-25 11 979). Gewebe und andere leicht deformierbare Materialien, wie weiche Kunststoffe, sind aber infolge ihrer Nachgiebigkeit bei Druckanwendung kaum in der Lage, beim Verdichten des feuerfesten Materials ihre Form beizubehalten, und dadurch werden Erzeugnisse mit unregelmäßigen und verformten Kanälen erhalten (vgl. AT-A-277 036), die den an sie in der Praxis gestellten Anforderungen nicht zu entsprechen vermögen. Dies gilt z. B. auch für feuerfeste Steine hoher Gasdurchlässigkeit, bestehend aus 10 bis 75 % Tonerde, Rest Siliziumdioxid und Bindemittel, mit allseitig durchgehenden, um ihre Orientierungsachse wendelartig verdrehten Kanälen mit einem Durchmesser von 0,001 bis 0,1 mm, deren Kanäle dadurch hergestellt werden, daß eine feuchte Mischung aus den feuerfesten Grundstoffen und dem Bindemittel in eine Form gefüllt wird, in die gleichzeitig wendelartig gekräuselte Kunststoffdrähte mit einem Durchmesser von 0,001 bis 0,1 mm so eingelegt werden, daß die Enden der Drähte die Innenwand der Form berühren, worauf der Inhalt der Form verpreßt, der erhaltene Stein getrocknet und dann mit heißen Gasen erhitzt und fertiggebrannt wird, wobei die Kunststoffdrähte geschmolzen und gasförmig ausgetrieben werden (AT-A-286 860). Es ist somit bei allen diesen bekannten Verfahren zur Erzeugung von gebrannten, feuerfesten Steinen mit durchgehenden Kanälen bzw. einer gerichteten Porosität unter Verwendung einer nicht-gießfähigen, körnigen, feuerfesten Masse schwierig, Kanäle zu erzeugen, die im fertigen Stein in der gewünschten Lage angeordnet sind und über ihre gesamte Länge die vorgesehenen Dimensionen aufweisen. Zur Beseitigung dieser Schwierigkeit ist auch schon versucht worden, für die Erzeugung von gerichteten Poren Formen zu verwenden, in denen an zwei einander gegenüberliegenden Seiten in den Formwänden Löcher gebohrt sind, durch die vor dem Einbringen des feuerfesten Materials Fäden, Metalldrähte oder feuerfeste Rohre quer über die Form gespannt sind, die bei der Formung des feuerfesten Materials in diesem eingebettet werden und dann beim Ausbringen des Steines aus der Form im Stein angeordnet sind und entweder ausgebrannt werden, wenn es sich um brennbare Fäden handelt, oder im Falle von Metalldrähten vor dem Steinbrand aus dem Stein herausgezogen werden (US-A-35 39 667). Als feuerfestes Material dient Korund, Mullit, Bauxit, Sillimanit, Magnesia, kieselsäurehaltiges Material und Zirkon. Auch diese Verfahrensweise ist jedoch nicht befriedigend, da sie einen hohen Zeitaufwand für die Anordnung der Fäden oder sonstigen Elemente für die Porenbildung erfordert, und weil es beim Ausziehen von Metalldrähten aus feuerfesten Steinen, wenn diese nicht aus einer Gießmasse, sondern aus einem körnigen, feuerfesten Material aufgebaut sind, zu einer Beschädigung der Kanäle kommen kann. Es ist daher in jüngster Zeit der Vorschlag gemacht worden, feuerfeste Steine mit durchgehenden Kanälen aus jeweils mehreren, nebeneinander angeordneten und miteinander verbundenen plattenförmigen Steinteilen auszubauen, die an ihren benachbarten Seitenflächen jeweils korrespondierende Ausnehmungen haben, die zusammen jeweils einen durchgehenden Kanal ergeben (europäische Patentanmeldung 21 861). Zweckmäßig sind diese Steinteile von einer Blechummantelung zusammengehalten, die ein Gasanschlußrohr aufweist. Die Herstellung solcher Steine ist jedoch nicht einfach, da die einzelnen Steinteile sorgfältig ausgeführt sein müssen.

Die Erfindung zielt nun darauf ab, ein Verfahren zur Herstellung von gebrannten, feuerfesten Steinen der eingangs erwähnten Art mit durchgehenden Kanälen zu schaffen, das mit einfachen Mitteln durchgeführt werden kann, mit Sicherheit das Vorliegen von Kanälen mit gleichmäßigen Dimensionen gewährleistet und den Erhalt von Steinen mit auch ansonst in jeder Hinsicht befriedigenden Eigenschaften bei annehmbaren Kosten ermöglicht. Es wurde gefunden, daß dies dann gelingt, wenn für die Bildung der Kanäle ein Gitter aus Metall verwendet und dieses beim Steinbrand im Stein belassen wird. Demnach ist das Verfahren gemäß der Erfindung zur Herstellung von gebrannten, feuerfesten Steinen mit durchgehenden Kanälen aus einem basischen, feuerfesten Material aus der Gruppe Magnesia, Mischungen von Magnesia und Chromerz, sowie Spinelle auf der Grundlage von $MgO.Al_2O_3$ und $MgO.Cr_2O_3$ mit einem MgO-Gehalt von 20 bis 37 Gew.-%, wobei das für die Steinherstellung dienende feuerfeste Material gekörnt in eine Form eingebracht und in dieser mit Elementen aus Metall zur Bildung der Kanäle verdichtet wird, dadurch gekennzeichnet, daß in die Form eine Schicht des feuerfesten, körnigen Materials eingebracht wird, auf diese Schicht ein Gitter aus Metall, das aus einer Vielzahl von parallel nebeneinander angeordneten Stäben, die jeweils an ihren beiden Enden durch je einen Querstab miteinander verbunden sind, lose aufgelegt und mit weiterem feuerfestem Material überschichtet und dann der Inhalt der Form verdichtet, vorzugsweise verpreßt, und der erhaltene Stein gebrannt wird, worauf die Endteile des Steines mit den von den Querstäben beim Brennen gebildeten Kanälen abgetrennt werden und auf den Stein gewünschtenfalls eine Blechummantelung, die gegebenenfalls ein Gasanschlußrohr aufweist, aufgebracht wird. Es ist für den Fachmann selbstverständlich, daß die erfindungsgemäß erhaltenen Steine auch mehrere Metallgitter enthalten können, indem zu ihrer Erzeugung in die Form für die Steinherstellung lagenweise abwechselnd feuerfestes Material und Metallgitter eingebracht werden.

Beim Steinbrand wird das Metallgitter oxidiert und das dabei gebildete Oxid, z. B. FeO, diffundiert in das umgebende Steinmaterial und wird von diesem, z. B. unter Bildung von Magnesiumferrit, absorbiert, wobei in dem Bereich, in dem sich ursprünglich das Metallgitter befand, ein Hohlraum entsteht, der den gewünschten durchgehenden Kanal bildet. Das feuerfeste Steinmaterial soll vorzugsweise mindestens 10 Gew.-% freies MgO enthalten, und mit Sicherheit eine gute Absorption bzw. Umsetzung des beim Steinbrand aus dem Gitter gebildeten Metalloxides, wie FeO, NiO, CuO, zu ermöglichen. Unter der Bezeichnung « freies MgO » ist dabei MgO zu verstehen, das nicht bereits gebunden ist, wie dies z. B. bei Spinellen, wie $MgO.Al_2O_3$, $MgO.Cr_2O_3$ oder $MgO.Fe_2O_3$, oder Magnesiumsilikaten, wie $CaO.MgO.SiO_2$ (Monticellit) oder $2\ MgO.SiO_2$ (Forsterit), der Fall ist.

In der Praxis erfolgt die Herstellung der erfindungsgemäßen Steine am besten auf die Weise, daß in die Steinform lagenweise abwechselnd feuerfestes Material und Metallgitter eingebracht werden und der Inhalt der Form, vorzugsweise unter Anwendung von Preßdruck, verdichtet wird, worauf dann die Steine aus der Steinform entnommen und rasch getrocknet und gebrannt werden. Die Metallgitter sind auf einfache Weise erhältlich, beispielsweise indem man Schweißdrähte mit dem vorgesehenen Durchmesser, die nebeneinander in einer Entfernung, die den im fertigen Stein gewünschten Abständen der Kanäle entspricht, angeordnet sind, jeweils an ihren Enden mit jeweils einem Querstab durch Punktschweißung verbindet. Nach dem Brennen der Steine werden in der Steinschleiferei die Steinteile, in welchen die Querstäbe angeordnet waren, abgetrennt, und der verbleibende Stein wird erforderlichenfalls genau zugeschliffen. Ein Zuschleifen ist insbesondere dann zweckmäßig, wenn die Steine als Gasspülsteine zum Einführen von Gasen in metallurgische Öfen und Gefäße mit einer Blechummantelung verwendet werden sollen. Das Aufbringen einer Blechummantelung kann auf jede der dafür zahlreichen bekannten Arten erfolgen, z. B. durch einfaches Überziehen der Steine mit einer vorgeformten Blechhülle, durch Aufspannen einer U-förmigen Blechhülle und anschließendes Befestigen einer oder zweier weiterer Blechplatten an den verbleibenden freien Seitenflächen der Steine, durch Aufkleben von Metallplatten u.s.w. Im Falle von Gasspülsteinen werden die blechummantelten Steine auch noch mit einem Anschlußrohr für die Zuführung von Gasen versehen.

Als Material für die Metallgitter wird vorzugsweise Stahl bzw. Eisen verwendet, und der Durchmesser der Stäbe der Metallgitter beträgt zweckmäßig 0,5 bis 3 mm, vorzugsweise 0,8 bis 1,8 mm.

Die Erfindung wird an Hand der folgenden Beispiele näher erläutert, wobei sich alle Prozentangaben, mit Ausnahme der Porosität, auf Gewichtsprozente beziehen.

## Beispiel 1

Zur Herstellung von Magnesiasteinen mit gerichteter Porosität wurde eine hochreine Sintermagnesia folgender Zusammensetzung und Körnung verwendet:

| | |
|---|---|
| $SiO_2$ | 0,14 % |
| $Fe_2O_3$ | 0,11 % |
| $Al_2O_3$ | 0,16 % |
| $Mn_3O_4$ | 0,03 % |
| $Cr_2O_3$ | 0,36 % |
| CaO | 0,80 % |
| MgO | 98,40 % |

| | |
|---|---|
| 15 % Sintermagnesia | 3-5 mm |
| 52 % Sintermagnesia | 0,3-3 mm |
| 33 % Sintermagnesia | 0-0,12 mm |

Als Bindelmittel diente 1 Gew.-% trockene Sulfitablauge, und die Mischung aus feuerfestem Material und Bindemittel wurde nach Zusatz von 2,1 l Wasser/100 kg Steinmischung mit Drahtgittern, deren einzelne Stäbe einen Durchmesser von 1,6 mm hatten, zu Steinen verpreßt. Diese wurden bei einer Temperatur von 1 600 °C gebrannt und wiesen dann an den Stellen, an denen sich die Stäbe der Drahtgitter befunden hatten, Kanäle mit einem Durchmesser von 1,6 mm auf.

Die Eigenschaften der nach Abschneiden der Steinteile mit den Querstäben erhaltenen Steine waren wie folgt:

| | In Kanalrichtung | Senkrecht zur Kanalrichtung |
|---|---|---|
| Raumgewicht: | 3,10 g/cm³ | 3,08 g/cm³ |
| Offene Porosität: | 12,9 % | 13,8 % |
| Kaltdruckfestigkeit: | 63,4 N/mm² | 39,2 N/mm² |
| Gasdurchlässigkeit: | >150 nPm | 2,1 nPm |

## Beispiel 2

Als Ausgangsmaterial wurde ein vorreagiertes Magnesia-Chromerz-Material (Simultansintermaterial) folgender Zusammensetzung verwendet:

| | |
|---|---|
| $SiO_2$ | 1,23 % |
| $Fe_2O_3$ | 11,14 % |
| $Al_2O_3$ | 4,76 % |
| $Mn_3O_4$ | 0,25 % |
| $Cr_2O_3$ | 18,94 % |
| CaO | 0,96 % |
| MgO | 62,72 % |

Dieses Ausgangsmaterial wurde zusammen mit 5 % Sintermagnesia der in Beispiel 1 angeführten Zusammensetzung in der im folgenden angegebenen Korngröße mit 1 % trockener Sulfitablauge und 1,8 l Kieseritlösung (29° Bé) auf 100 kg Steinmischung vermischt:

| | |
|---|---|
| 67 % Simultansinter | 0,3-3 mm |
| 28 % Simultansinter | unter 0,12 mm |
| 5 % Sintermagnesia | unter 0,12 mm |

Die Mischung wurde in einer Preßform mit einem Drahtgitter einer Stärke von 1 mm zu Steinen verpreßt, die dann bei 1 550 °C gebrannt wurden. Nach dem Brand hatten die Steine Kanäle mit einem Durchmesser von 1 mm. Die Eigenschaften dieser Steine nach Abtrennung der die Querstäbe enthaltenden äußeren Teile waren wie folgt:

|  | In Kanalrichtung | Senkrecht zur Kanalrichtung |
|---|---|---|
| Raumgewicht: | 3,23 g/cm³ | 3,25 g/cm³ |
| Offene Porosität: | 17,4 % | 16,6 % |
| Kaltdruckfestigkeit: | 91,4 N/mm² | 90,2 N/mm² |
| Gasdurchlässigkeit: | >150 nPm | 1,2 nPm |

## Beispiel 3

Zur Herstellung von MgO-Cr$_2$O$_3$-Spinellsteinen wurden 10 % Sintermagnesia der in Beispiel 1 angeführten Zusammensetzung einer Korngröße von 0 bis 0,12 mm und 90 % Sintermaterial der folgenden Analyse (70 % 0,2 bis 2 mm, 20 % 2 bis 4 mm) mit 3 kg Magnesiumsulfatlösung/100 kg vermischt :

| | |
|---|---|
| SiO$_2$ | 0,46 % |
| Fe$_2$O$_3$ | 1,78 % |
| Al$_2$O$_3$ | 0,85 % |
| Cr$_2$O$_3$ | 79,00 % |
| CaO | 0,60 % |
| MgO | 17,31 % |

Die Mischung wurde mit Drahtgittern einer Stärke von 1,8 mm zu Steinen verpreßt, die bei 1 800 °C gebrannt wurden. Nach dem Brand hatten die Steine glatte, durchgehende Kanäle und folgende Eigenschaften :

|  | In Kanalrichtung | Senkrecht zur Kanalrichtung |
|---|---|---|
| Raumgewicht: | 3,85 g/cm³ | 3,87 g/cm³ |
| Offene Porosität: | 14,5 % | 15,3 % |
| Kaltdruckfestigkeit: | 41,0 N/mm² | 38,5 N/mm² |
| Gasdurchlässigkeit: | >150 nPm | 2,8 nPm |

## Beispiel 4

Für den Aufbau von MgO-Al$_2$O$_3$-Spinellsteinen diente folgendes Ausgangsmaterial :

| | |
|---|---|
| SiO$_2$ | 0,16 % |
| Fe$_2$O$_3$ | 0,10 % |
| Al$_2$O$_3$ | 69,40 % |
| Cr$_2$O$_3$ | 0,10 % |
| CaO | 0,41 % |
| MgO | 29,83 % |

Dieses Material wurde in gekörnter Form (70 % 0,3 bis 4 mm, 30 % unter 0,2 mm) mit 5 % Sintermagnesia der in Beispiel 1 angeführten Zusammensetzung und einer Korngröße von unter 0,12 mm unter Zusatz von Magnesiumsulfatlösung als Bindemittel mit Metallgittern einer Stärke von 0,8 mm zu Steinen verpreßt, die bei 1 700 °C gebrannt wurden. Die Eigenschaften der dabei erhlatenen Steine mit gerichteter Porosität sind aus der folgenden Tabelle ersichtlich :

|  | In Kanalrichtung | Senkrecht zur Kanalrichtung |
|---|---|---|
| Raumgewicht: | 3,05 g/cm³ | 3,09 g/cm³ |
| Offene Porosität: | 18,8 % | 17,9 % |
| Kaltdruckfestigkeit: | 38,5 N/mm² | 36,0 N/mm² |
| Gasdurchlässigkeit: | >150 nPm | 4,5 nPm |

0 083 919

Diese Prüfdaten ändern sich nicht wesentlich, wenn in der Steinmischung die Menge der Sintermagnesia von 5 % auf 10 % erhöht wird.

Bei Wiederholung der Beispiele 1 bis 4 unter Verwendung von Drahtgittern mit einem Durchmesser von jeweils 0,5 und 3 mm wurden gleichfalls zufriedenstellende Ergebnisse erhalten. Dabei weisen durch Verpressen gewonnene Steine bessere Daten auf als durch Stampfen, Rütteln oder Vibrieren hergestellte. Der Steinbrand erfolgt zweckmäßig in allen Fällen bei einer Temperatur von mindestens 1 550 °C und nicht über 1 800 °C, vorzugsweise bei einer Temperatur von 1 560 bis 1 600 °C.

**Patentansprüche**

1. Verfahren zur Herstellung von gebrannten, feuerfesten Steinen mit durchgehenden Kanälen aus einem basischen, feuerfesten Material aus der Gruppe Magnesia, Mischungen von Magnesia und Chromerz, sowie Spinelle auf der Grundlage von MgO.Al$_2$O$_3$ und MgO.Cr$_2$O$_3$ mit einem MgO-Gehalt von 20 bis 37 Gew.-%, wobei das für die Steinherstellung dienende feuerfeste Material gekörnt in eine Form eingebracht und in dieser mit Elementen aus Metall zur Bildung der Kanäle verdichtet wird, dadurch gekennzeichnet, daß in die Form eine Schicht des feuerfesten, körnigen Materials eingebracht wird, auf diese Schicht ein Gitter aus Metall, das aus einer Vielzahl von parallel nebeneinander angeordneten Stäben, die jeweils an ihren beiden Enden durch je einen Querstab miteinander verbunden sind, lose aufgelegt und mit weiterem feuerfestem Material überschichtet und dann der Inhalt der Form verdichtet, vorzugsweise verpreßt, und der erhaltene Stein gebrannt wird, worauf die Endteile des Steines mit den von den Querstäben beim Brennen gebildeten Kanälen abgetrennt werden und auf den Stein gewünschtenfalls eine Blechummantelung, die gegebenenfalls ein Gasanschlußrohr aufweist, aufgebracht wird.

2. Verfahren nach Anspruch 1, dadurch gekennzeichnet, daß in die Form für die Steinherstellung lagenweise abwechselnd feuerfestes Material und Metallgitter eingebracht werden.

3. Verfahren nach Anspruch 1 oder 2, dadurch gekennzeichnet, daß die Stäbe des Metallgitters einen Durchmesser von 0,5 bis 3 mm, vorzugsweise 0,8 bis 1,8 mm, haben.

4. Verfahren nach einem der Ansprüche 1 bis 3, dadurch gekennzeichnet, daß das feuerfeste Material mindestens 10 Gew.-% freies MgO enthält.

**Claims**

1. Method of producing burned refractory bricks with continuous channels of a basic refractory material from the group magnesia, mixtures of magnesia and chrome ore as well as spinels on the base of MgO.Al$_2$O$_3$ and MgO.Cr$_2$O$_3$ having an MgO-content of 20 to 37 % by weight, in which process the refractory material for making the bricks is brought in form of grains into a mold and is compacted therein with elements of metal for forming the channels, characterized in that a layer of the refractory particulate material is introduced into the mold, a grid of metal consisting of a plurality of parallel adjacent rods is loosely laid upon said layer and is covered with further refractory material, the rods being connected on both their ends by each one cross-rod, and then the contents of the mold is compacted, preferably compressed, and the obtained brick is burned, whereupon the endportions of the brick with the channels formed by the cross-rods on burning are separated off and the brick optionally is covered with a cover of sheet metal having a gas connection pipe, is desired.

2. Process according to claim 1, characterized in that refractory material and metal grids are introduced into the mold for brickmaking in alternating layers.

3. Process according to claim 1 or 2, characterized in that the rods of the metal grid have a diameter of 0.5 to 3 mm, preferably 0.8 to 1.8 mm.

4. Process according to any of claims 1 to 3, characterized in that the refractory material contains at least 10 % by weight of free MgO.

**Revendications**

1. Procédé de fabrication de briques réfractaires, cuites, ayant des canaux qui les traversent, à partir d'une matière réfractaire, basique, du groupe comprenant de la magnésie, des mélanges de magnésie et de minerai de chrome, ainsi que des spinelles à base de MgO.Al$_2$O$_3$ et MgO.Cr$_2$O$_3$ avec une teneur en MgO de 20 à 37 % en poids, la matière réfractaire servant à la fabrication des briques étant introduite sous forme granulée dans un moule et étant comprimée dans celui-ci avec des éléments en métal pour la formation des canaux, caractérisé en ce que, dans le moule, une couche de la matière granuleuse, réfractaire, est introduite, en ce qu'un treillis en métal, qui est constitué d'un grand nombre de barres agencées parallèlement l'une à côté de l'autre et reliées l'une à l'autre à leurs deux extrémités par chaque fois une barre transversale, est posé de manière lâche sur cette couche et est recouvert de matière réfractaire supplémentaire, en ce qu'ensuite le contenu du moule est comprimé, de préférence pressé, et en ce que la brique obtenue est cuite, après quoi les parties d'extrémité de la brique présentant les

6

canaux formés au cours de la cuisson par les barres transversales sont séparées, et une enveloppe de tôle, qui présente éventuellement un tube de raccordement de gaz, et le cas échéant appliquée sur la brique.

2. Procédé suivant la revendication 1, caractérisé en ce que de la matière réfractaire et des treillis métalliques sont alternativement introduits en couches dans le moule pour la fabrication des briques.

3. Procédé suivant l'une des revendications 1 et 2, caractérisé en ce que les barres du teillis métallique présentent un diamètre de 0,5 à 3 mm, de préférence de 0,8 à 1,8 mm.

4. Procédé suivant l'une des revendications 1 à 3, caractérisé en ce que la matière réfractaire contient au moins 10 % en poids de MgO libre.